# FASCICULE DE BREVET EUROPEEN

(11) **EP 2 368 399 B1**
(45) Date de publication et mention de la délivrance du brevet: **04.11.2015**
(21) Numéro de dépôt: 09793559.7
(22) Date de dépôt: 03.12.2009
(51) Int. Cl.: H04B 1/16

(54) **Dispositif, procédé et système pour la communication selon un haut et un bas débit**
Einrichtung, Verfahren und System für die Kommunikation gemäß einer hochen und niedrigen Durchsatzrate
Device, method and system for communicating according to a high and a low rate

(30) Priorité: 18.12.2008 FR 0807112
(43) Date de publication de la demande: 28.09.2011
(73) Titulaire: Schneider Electric Industries SAS, 92500 Rueil-Malmaison (FR)
(72) Inventeur: COUTELOU, Olivier, F-38000 Grenoble (FR)
(74) Mandataire: Tripodi, Paul
(86) Numéro de dépôt international: PCT/FR2009/001371
(87) Numéro de publication internationale: WO 2010/070213

(56) Documents cités:
- EP-A- 1 858 203
- WO-A-00/19622
- GB-A- 2 342 017
- US-A- 4 586 177

## Description

### DOMAINE TECHNIQUE

L'invention concerne un dispositif de communication pour réseaux de communication sans fil comportant :
- des moyens d'émission et/ou de réception pour communiquer selon un bas débit et selon un haut débit, et
- des moyens de traitement connectés aux moyens d'émission et/ou de réception pour recevoir et envoyer des signaux de données.

L'invention concerne aussi une passerelle, un appareil et un système intégrant un tel dispositif.

L'invention concerne aussi un procédé de communication pour réseaux de communication sans fil communiquant selon un haut débit et selon un bas débit.

### ETAT DE LA TECHNIQUE

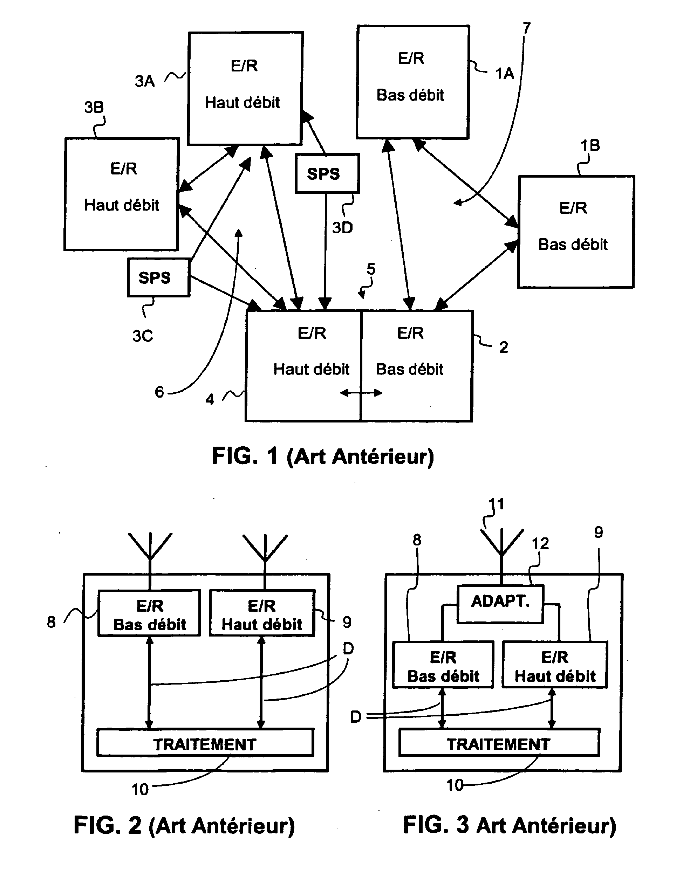

Dans des installations existantes comme celle représentée sur la figure 1, des dispositifs de communication sans fil 1A, 1B et 2 dialoguent généralement avec des protocoles de communication bas débit. Des dispositifs de communication à haut débit plus récents 3A 3B et 4 dialoguent entre eux mais nécessitent une passerelle 5 haut débit-bas débit pour le passage des informations entre des réseaux 6 à haut débit et des réseaux 7 à bas débit. De telles passerelles 5 permettent une compatibilité ascendante entre des anciens réseaux à bas débit et des réseaux à haut débit. Ainsi, des fonctions déjà existantes avec des dispositifs à bas débits pourront toujours fonctionner même en dialoguant avec des dispositifs à haut débits. Il est connu d'utiliser des passerelles entre des dispositifs de communication ayant des débits, des types de modulation, des protocoles et/ou des fréquences différents.

Parmi les dispositifs à haut débit, certains 3C et 3D sont à messages courts et unidirectionnels. Ils sont généralement intégrés dans des dispositifs de communications sans fil autoalimentés et devant fonctionner à très faible énergie. Par exemple, des interrupteurs à télécommande sans fil avec générateur électrique intégré. Ces interrupteurs à télécommande autoalimentés seront nommés SPS (Self Powered Switch).

Un premier exemple de passerelles avec dispositifs de communication sans fil est représenté sur la figure 2. Cette passerelle comporte un premier circuit 8 émetteur/récepteur radio à bas débit et un second circuit 9 émetteur/récepteur radio à haut débit. Ces circuits sont connectés à un circuit de traitement 10 pour la transmission et la réception de données D. Parfois, comme représenté sur la figure 3, une seule antenne 11 est associée à un adaptateur 12 pour être raccordée aux circuits 8 et 9 d'émission et de réception.

Un autre exemple de passerelle de communication entre réseaux de communication sans fil est décrit dans la demande de brevet EP1858203.

Un autre exemple d'un dispositif configuré à changer son mode de fonctionnement en haut et en bas débit d'après la détection d'un certain message est décrit dans WO 00/19622.

Les passerelles ou les dispositifs de communication fonctionnant avec deux débits, deux protocoles ou deux types de démodulation sont très consommateur d'énergie électrique. Par exemple, lorsque les dispositifs de communication sont associés à des interrupteurs de type SPS, ils doivent pouvoir être disposés dans des organes de commandes et être alimentés à travers la charge. Ainsi, les dispositifs de communication connus pouvant recevoir deux types de réseaux ou ayant des fonctions de passerelle ne peuvent pas être utilisés dans des applications à très basse consommation. De plus, le coût de passerelles connues compatibles avec des réseaux de communication déjà installés est élevé.

### EXPOSE DE L'INVENTION

L'invention a pour but un dispositif et un procédé de communication sans fil fonctionnant avec deux débits différents et ayant une très faible consommation électrique, ainsi qu'une passerelle, un appareil et un système intégrant un tel dispositif.

Dans un dispositif de communication pour réseaux de communication sans fil selon l'invention comportant :
- des moyens d'émission et/ou de réception pour communiquer selon un bas débit et selon un haut débit, et
- des moyens de traitement connectés aux moyens d'émission et/ou de réception pour recevoir et envoyer des signaux de données
- lesdits moyens d'émission et/ou de réception comportent
   - des moyens de paramétrage pour changer le mode fonctionnement en haut débit et en bas débit,
   - des moyens pour fournir un signal représentatif de la détection d'un signal de porteuse, et
   - des moyens pour fournir un signal représentatif de la synchronisation, et
- les moyens de traitement sont connectés aux moyens d'émission et/ou de réception :
   - pour recevoir ledit signal représentatif de la réception d'un signal de porteuse et ledit signal représentatif de la réception d'un signal de synchronisation, et
   - pour fournir aux moyens de paramétrage un signal de paramétrage de mode de fonctionnement en fonction dudit signal représentatif de la réception dudit signal de porteuse et dudit signal représentatif de la synchronisation, et
ledits moyens de réception étant configurés en écoute d'un signal à haut débit, et
lesdits moyens de traitement fournissent ledit signal de paramétrage de mode de fonctionnement pour un fonctionnement en bas débit lorsque ledit signal représentatif de la synchronisation haut débit n'est pas reçu avant la fin d'un premier temps prédéterminé après ledit signal représentatif de la réception d'un signal de porteuse.

Dans un mode de réalisation particulier, lesdits moyens de traitement fournissent ledit signal de paramétrage de mode de fonctionnement pour un fonctionnement en haut débit :
- lorsque ledit signal représentatif de la synchronisation haut débit est reçu après ledit signal représentatif de la réception d'un signal de porteuse et avant la fin d'un premier temps prédéterminé,
- à l'initialisation par défaut,
- après la fin de la réception d'un message en haut débit ou en bas débit,
- lorsque ledit signal représentatif de la synchronisation bas débit n'est pas reçu après ledit signal représentatif de la réception d'un signal de porteuse et avant la fin d'un second temps prédéterminé supérieur au premier temps prédéterminé, ou
- après un troisième temps prédéterminé depuis la détection dudit signal représentatif de la réception d'un signal de porteuse, ledit troisième temps étant supérieur à la durée maximale de réception d'un message long en bas débit.

Avantageusement, le dispositif de communication comporte une liaison électronique entre lesdits moyens d'émission et/ou de réception et lesdits moyens de traitement pour communiquer sur le même support au moins deux signaux parmi le signal de porteuse, le signal de synchronisation, le signal de donnée et/ou le signal de paramétrage de mode de fonctionnement.

Une passerelle de communication selon l'invention entre réseaux de communication sans fil comportant des moyens de communication pour pouvoir communiquer entre des réseaux de communication à débits différents comporte au moins un dispositif de communication tel que défini ci-dessus pour recevoir des messages de communication en haut débits et en bas débit.

Un appareil de commande électrique selon l'invention comportant des moyens de réception de télécommande comporte au moins un dispositif de communication tel que défini ci-dessus pour recevoir des messages de communication en haut débits et en bas débit.

Un système de communication selon l'invention pour réseaux de communication sans fil comportant :
- au moins un dispositif de communication bas débit pouvant communiquer sur une ou plusieurs fréquences, et
- au moins un dispositif de communication haut débit communiquant avec au moins une fréquence commune avec lesdits moyens de communication bas débit
comporte, au moins un dispositif de communication tel que défini ci-dessus pour recevoir des messages de communication en haut débits et en bas débit.

Un procédé de communication selon l'invention pour réseaux de communication sans fil communiquant selon un haut débit et selon un bas débit comporte des étapes :
- de configuration du fonctionnement en haut débit,
- de détection d'un signal représentatif de la réception d'un signal de porteuse,
- de fourniture d'un signal représentatif de la synchronisation,
- de commande de paramétrage de modes de fonctionnement haut débit ou bas débit en fonction dudit signal représentatif de la réception d'un signal de porteuse et dudit signal représentatif de la synchronisation,
la commande de paramétrage de modes de fonctionnement vers le bas débit est réalisée lorsque ledit signal représentatif de la synchronisation n'est pas reçu avant la fin d'un premier temps prédéterminé après ledit signal représentatif de la réception d'un signal de porteuse.

Avantageusement, la commande de paramétrage de modes de fonctionnement vers le haut débit est réalisée :
- lorsque ledit signal représentatif de la synchronisation haut débit est reçu après ledit signal représentatif de la réception d'un signal de porteuse et avant la fin d'un premier temps prédéterminé,
- à l'initialisation par défaut,
- après la fin de la réception d'un signal en haut débit ou en bas débit,
- lorsque ledit signal représentatif de la synchronisation bas débit n'est pas reçu après ledit signal représentatif de la réception d'un signal de porteuse et avant la fin d'un second temps prédéterminé supérieur au premier temps prédéterminé, ou
- après un troisième temps prédéterminé depuis la détection dudit signal représentatif de la réception d'un signal de porteuse, ledit troisième temps étant supérieur à la durée maximale de réception d'un signal long en bas débit.

Dans une première variante le procédé comporte :
- la scrutation selon un cycle de scrutation ayant une première période à une première fréquence fonctionnant en bas débit, une seconde période à une seconde fréquence fonctionnant en haut ou en bas débit, une troisième période à une troisième fréquence fonctionnant en bas débit, et une quatrième période à ladite seconde fréquence fonctionnant en haut ou en bas débit,
- l'émission par un dispositif de communication à haut débit à ladite seconde fréquence de messages répétitifs espacés d'une période d'émission de durée différente des périodes dudit cycle de scrutation, et
- le contrôle de commande de paramétrage de débit pendant les périodes à une seconde fréquence fonctionnant en haut ou en bas débit.

De préférence, dans ce procédé :
- ledit dispositif de communication à haut débit émet au moins trois messages répétitifs,
- lesdites périodes du cycle de scrutation ont une première durée, et
- ladite période d'émission desdits messages répétitifs a une durée sensiblement égale à 2/3 ou à 4/3 de la durée des périodes de scrutation.

Dans une seconde variante le procédé comporte :
- la scrutation selon un cycle de scrutation ayant une première période à une première fréquence fonctionnant en bas débit, une seconde période à une seconde fréquence fonctionnant en haut ou en bas débit et une troisième période à une troisième fréquence fonctionnant en bas débit,
- l'émission par un dispositif de communication à haut débit à ladite seconde fréquence de messages répétitifs espacés de plusieurs périodes de durées différentes, et
- le contrôle de commande de paramétrage de débit pendant les périodes à une seconde fréquence fonctionnant en haut ou en bas débit.

De préférence, dans ce procédé :
- ledit dispositif de communication à haut débit émet au moins quatre messages répétitifs,
- lesdites périodes du cycle de scrutation ont une première durée, et
- les périodes d'émission entre des messages répétitifs ont une première durée sensiblement égale à 4/3 de la durée des périodes de scrutation, une seconde durée sensiblement égale à 2,5/3 de la durée des périodes de scrutation et une troisième durée sensiblement égale à 5/3 de la durée des périodes de scrutation.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma de réseaux de communication haut débit et bas débit comportant des dispositifs de communication connus,
- les figures 2 et 3 représentent des dispositifs de communication connus,
- la figure 4 représente un schéma d'un dispositif de communication selon un premier mode de réalisation de l'invention,
- la figure 5 représente un schéma d'un appareil comportant un dispositif de communication selon un premier mode de réalisation de l'invention,
- la figure 6 représente un schéma de réseaux de communication haut débit et bas débit comportant au moins un dispositif de communication selon un mode de réalisation de l'invention,
- les figures 7A à 7F représentent un premier chronogramme de fonctionnement d'un dispositif de communication selon un mode de réalisation de l'invention,
- les figures 8A à 8F représentent un second chronogramme de fonctionnement d'un dispositif de communication selon un mode de réalisation de l'invention,
- la figure 9 représente un premier organigramme comportant des étapes d'un procédé selon l'invention,
- la figure 10 représente un schéma de réseaux de communication haut débit et bas débit à plusieurs fréquences comportant au moins un dispositif de communication selon un mode de réalisation de l'invention,
- la figure 11 représente un premier chronogramme de fonctionnement montrant les séquences de scrutation par changement de fréquence d'un récepteur et des périodes d'émission d'un émetteur haut débit dans un procédé selon un mode de réalisation de l'invention,
- la figure 12 représente un second chronogramme de fonctionnement montrant les séquences de scrutation par changement de fréquence d'un récepteur et des périodes d'émission d'un émetteur haut débit dans un procédé selon un mode de réalisation de l'invention,
- la figure 13 représente un second organigramme comportant des étapes d'un procédé selon l'invention avec changement de fréquence, et
- la figure 14 représente un troisième organigramme comportant des étapes d'un procédé selon l'invention avec changement de fréquence.

### DESCRIPTION DETAILLEE DE MODES DE REALISATION PREFERES

Dans les dispositifs de communication pour réseaux de communication sans fil, l'émission et la réception en bas débit se fait généralement avec des messages longs dont la durée est généralement supérieure à 40 ms (millisecondes). Le préambule du message durant la détection de la synchronisation est souvent supérieur à 3 ms. Par exemple, un des bas débits les plus connus est à 2,4 kbit/s.

Un haut débit est par exemple de l'ordre de 100 kbit/s avec un préambule très court. En particulier, des interrupteurs à télécommande autoalimentés nommés SPS (Self Powered Switch) peuvent émettre des messages courts dont la durée est inférieure à 1 milliseconde par exemple.

Dans les dispositifs connus deux circuits de communication, dont un premier en haut débit et un second en bas débit, permettent de communiquer des informations ou des données entre les différents protocoles.

Pour éviter des coûts élevés de certaines passerelles et la consommation élevée de ces dispositifs, des dispositifs selon des modes de réalisation de l'invention comportent un circuit émetteur/récepteur radio pouvant fonctionner en haut débit et en bas débit. Ce circuit est connecté à un circuit de traitement qui commande le paramétrage de mode de fonctionnement en fonction de signaux de détection et de l'intervalle de temps entre ces signaux.

De préférence, un récepteur radio est en écoute prioritaire du protocole haut débit émis par les SPS à haut débit pour intercepter un signal court à haut débit. Si en présence de signal de porteuse, un message haut débit n'est pas détecté, le dispositif est commandé pour fonctionner en bas débit au moins pendant la durée de réception du message.

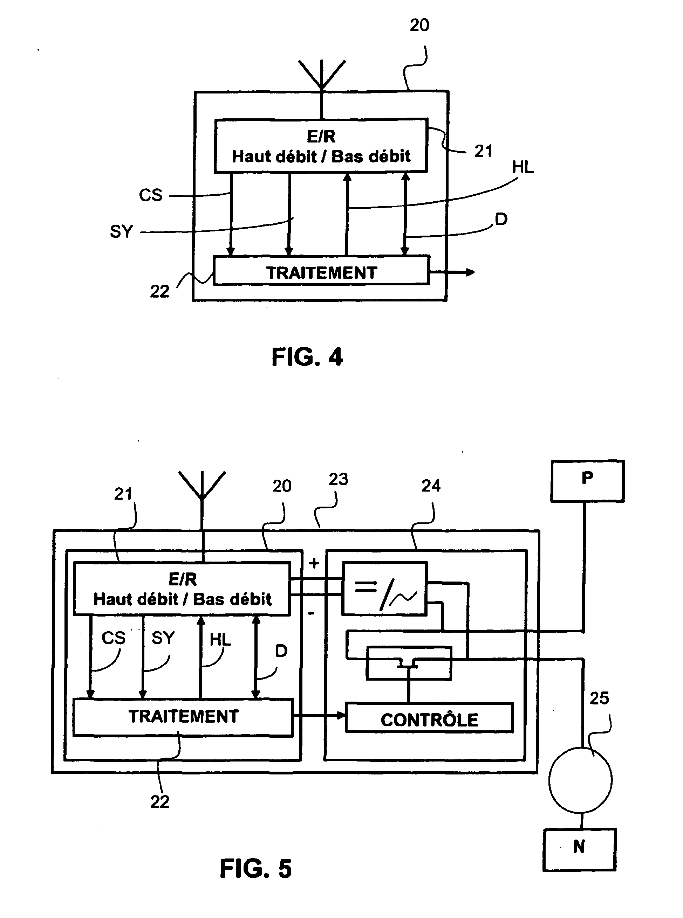

La figure 4 représente un schéma d'un dispositif 20 de communication selon un premier mode de réalisation de l'invention. Ce dispositif comporte un circuit 21 émetteur/récepteur radio relié à un circuit de traitement 22. Le circuit 21 comporte une entrée de paramétrage pour recevoir un signal HL de paramétrage de mode fonctionnement en haut débit et en bas débit fourni par le circuit de traitement 22. Les échanges de donnée entre les deux circuits sont représentés par un lien D. Pour déterminer le paramétrage de débit, le circuit 22 fournit un signal CS représentatif de la réception d'un signal de porteuse, et un signal SY représentatif de la synchronisation. Le circuit de traitement 22 reçoit ledit signal CS représentatif de la réception d'un signal de porteuse et ledit signal SY représentatif de la réception d'un signal de synchronisation pour fournir un signal HL de paramétrage de mode de fonctionnement en fonction des signaux CS et SY.

Dans les échanges entre le circuit émetteur/récepteur 21 et le circuit de traitement 22, les signaux peuvent être portés par des mêmes lignes. Par exemple, le signal de données D et le signal de paramétrage HL peuvent circuler sur la même ligne. De même, les signaux de porteuse CS et de synchronisation SY peuvent être sur des lignes indépendantes et agir directement sur des entrées d'interruption pour un traitement ultra rapide ou être groupés aussi dans une même ligne avec d'autres signaux. Dans ce mode de réalisation, le dispositif comporte une liaison électronique entre le circuit 21 d'émission et/ou de réception et le circuit 22 de traitement pour communiquer sur le même support au moins deux signaux parmi le signal CS de porteuse, le signal SY de synchronisation, le signal D de donnée et/ou le signal HL de paramétrage de mode de fonctionnement.

Le signal CS est basé sur la détection d'un signal radio de porteuse dit "CS" (Carrier Sense), par exemple lorsque l'intensité ou l'amplitude du signal reçu dépasse un seuil prédéterminé. Cette détection peut aussi être représentative du niveau d'énergie haute fréquence sur un canal radio sélectionné. Ainsi, le circuit de réception fait ou utilise une mesure quasi permanente du signal radio reçu ou RSSI (Received Signal Strength Indicator).

Le circuit de traitement fournit ledit signal HL de paramétrage de mode de fonctionnement pour un fonctionnement en bas débit lorsque ledit signal représentatif de la synchronisation SY n'est pas reçu avant la fin d'un premier temps prédéterminé après ledit signal CS représentatif de la réception d'un signal de porteuse.

La figure 5 représente un schéma d'un appareil 23 comportant un dispositif de communication 20 selon un premier mode de réalisation de l'invention pouvant recevoir et/ou émettre des messages de communication en haut débit ou en bas débit. L'appareil électrique pouvant être un actionneur ayant un circuit 24 de commande et d'alimentation alimentés à travers une charge électrique. La consommation électrique d'un dispositif selon l'invention et très réduite pour éviter de perturber la commande de la charge.

Une passerelle de communication entre réseaux de communication sans fil peut être utilisée seule ou faire partie d'un appareil par exemple comme celui de la figure 5. Une telle passerelle comporte au moins un dispositif de communication selon un mode de réalisation pour recevoir des messages de communication en haut débits et en bas débit avec le même circuit émetteur/récepteur.

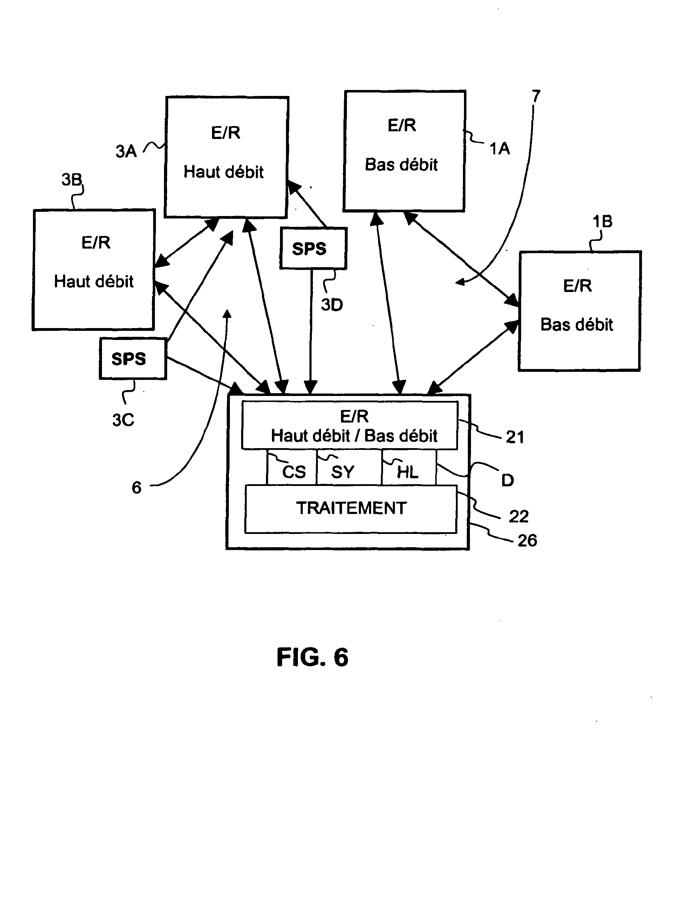

La figure 6 représente un schéma de réseaux de communication haut débit et bas débit comportant au moins un dispositif de communication 26 selon un mode de réalisation de l'invention. Dans ce cas, le dispositif 26 est dans une passerelle de communication totalement compatible avec les autres dispositifs de communication préexistants.

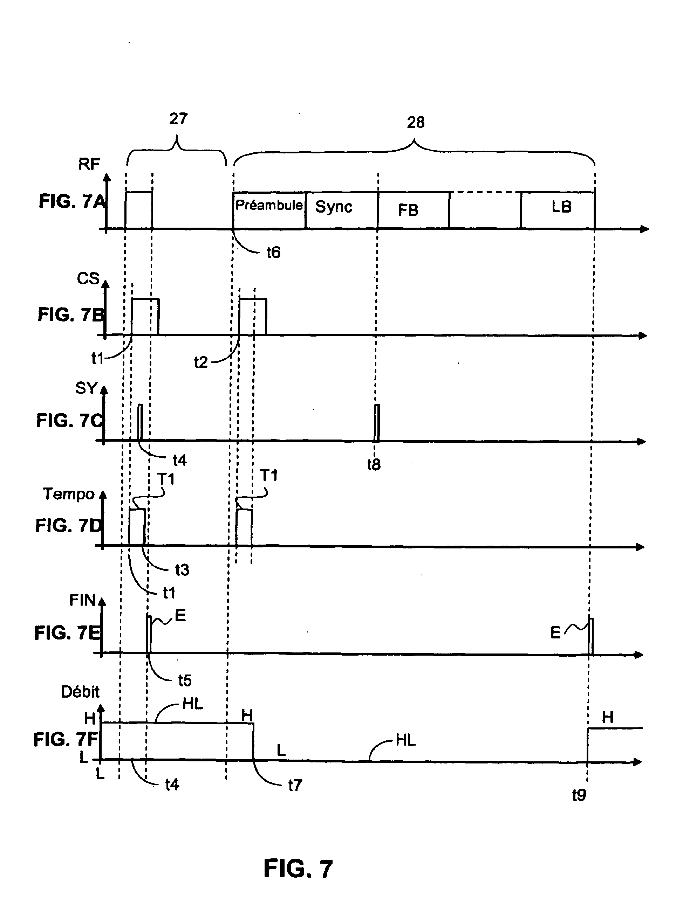

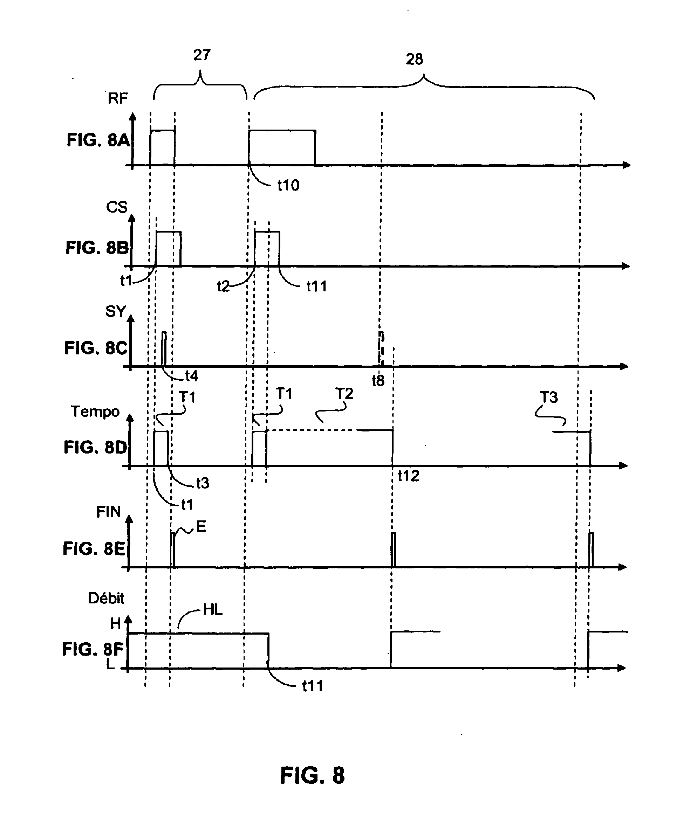

Les figures 7A à 7F et 8A à 8F représentent des chronogrammes de fonctionnement d'un dispositif de communication selon un mode de réalisation de l'invention. Dans ces chronogrammes, une première partie 27 montre la réception d'un signal haut débit de type court et une seconde partie 28 montre la réception d'un signal bas débit long. Les figures 7A et 8A montrent la réception et la présence d'un signal RF de porteuse haute fréquence. Sur les figures 7B et 8B le circuit émetteur/récepteur détecte la présence de la porteuse et envoie aux l'instants t1 ou t2 un signal CS au circuit de traitement un peu retardé par rapport au début du signal RF. A ces instants, des contrôles T1 et T2 du temps sont lancés pour contrôler si un signal de synchronisation SY et fourni avant la fin des contrôles de temps T1 ou T2.

Sur la figure 7D, un contrôle du temps T1 de durée prédéterminée commence à l'instant t1 et ce termine à un instant t3. Dans cet intervalle, un signal de synchronisation SY est fourni à un instant t4 avant la fin du contrôle de temps t3. Puisque le signal de synchronisation SY arrive avant la fin du contrôle t3, le circuit de traitement confirme un signal HL représentatif d'un fonctionnement en haut débit. Dans ce cas, à l'instant t4 de la figure 7F le signal HL reste sur la valeur H en haut débit. A l'instant t5, un signal E de fin de réception est fourni au circuit de traitement, le signal HL reste sur la valeur H en haut débit.

Lors de la réception d'un signal en bas débit commençant à l'instant t6, un préambule et une phase de synchronisation sont longs très supérieurs à ceux d'un signal à haut débit. Le signal CS est fourni à l'instant t2 après t6. La temporisation T1 est lancée mais un signal de synchronisation SY n'est pas reçu pendant ce laps de temps. Le signal HL de paramétrage de mode de fonctionnement passe alors en position bas débit à l'instant t7 pour la réception du message. Le signal de synchronisation arrivera plus tard à l'instant t8 mais le traitement de la réception en bas débit est déjà commencé. A l'instant t9, le dernier bit du message bas débit est reçu et un signal E de fin de réception est fourni. Le mode de fonctionnement repasse alors à haut débit pour privilégier la réception de signaux à haut débit et courts.

Les figures 8A à 8F traitent le cas d'une réception normale en haut débit et les cas de dysfonctionnement ou de parasites en bas débit. Dans ces cas, le mode de fonctionnement repasse en haut débit. Par exemple à l'instant t10 un signal RF est reçu pendant une durée plus longue qu'un signal haut débit. Un signal de synchronisation n'est pas reçu pendant la période T1 succédant au signal CS, donc le mode de fonctionnement passe en bas débit à l'instant t11. Si le message bas débit est correct, un signal de synchronisation en bas débit est fourni à l'instant t8. Ainsi, un contrôle de la réception du signal de synchronisation en bas débit permet de confirmer la réception d'un signal bas débit. Dans le cas contraire comme dans la figure 8D, un second contrôle de temporisation T2 permet de vérifier si la synchronisation est arrivée avant la fin de la temporisation à l'instant t12. Sans signal de synchronisation, un signal de fin de message E est fourni et le mode fonctionnement repasse en haut débit. Un autre contrôle en fin de longueur maximale de message haut débit est lancé avec une temporisation T3. Il permet de repasser automatique en haut débit à la fin de cette temporisation.

Ainsi, dans un dispositif de communication selon un mode de réalisation de l'invention le circuit de traitement fourni ledit signal de paramétrage ou de confirmation de mode de fonctionnement pour un fonctionnement en haut débit :
- lorsque ledit signal représentatif de la synchronisation SY est reçu après ledit signal représentatif de la réception d'un signal CS de porteuse et avant la fin d'un premier temps T1 prédéterminé,
- à l'initialisation par défaut,
- après la fin de la réception d'un signal en haut débit ou en bas débit,
- lorsque ledit signal représentatif de la synchronisation SY bas débit n'est pas reçu après ledit signal représentatif de la réception d'un signal de porteuse CS et avant la fin d'un second temps T2 prédéterminé supérieur au premier temps prédéterminé T1, ou
- après un troisième temps T3 prédéterminé depuis la détection dudit signal représentatif de la réception d'un signal CS de porteuse, ledit troisième temps étant supérieur à la durée maximale de réception d'un signal long en bas débit.

Dans un procédé de communication selon un mode de réalisation de l'invention, la commande de paramétrage de modes de fonctionnement vers le haut débit est réalisée avec les mêmes conditions.

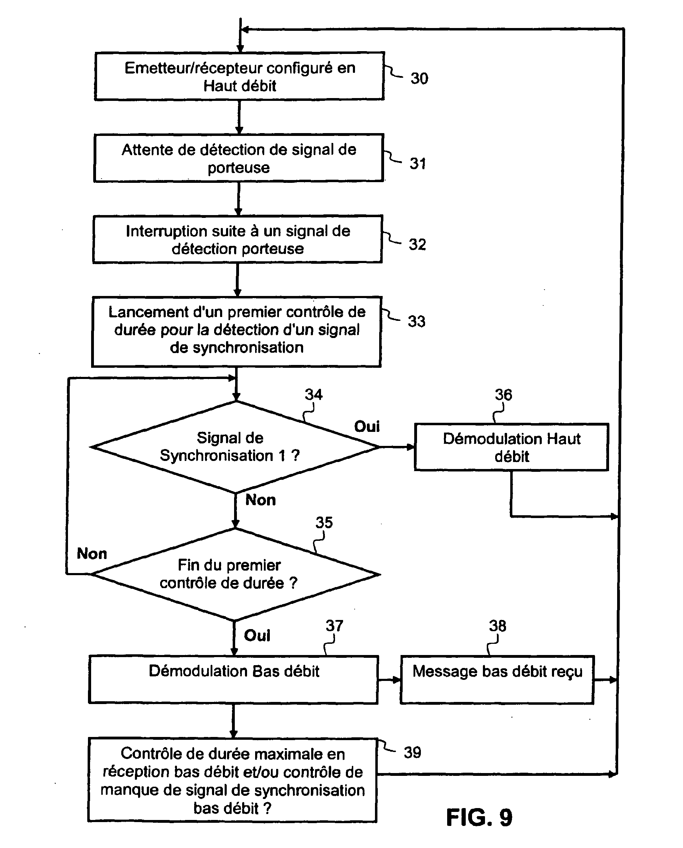

La figure 9 représente un premier organigramme comportant des étapes d'un procédé selon l'invention. A une étape 30, l'émetteur est configuré par défaut pour un fonctionnement en haut débit. Une attente de détection de signal de porteuse CS est réalisée à une étape 31. Puis à une étape 32, il y a la détection d'un signal représentatif de la réception d'un signal de porteuse, et à une étape 33 le lancement d'un premier contrôle de durée T1 pour la détection d'un signal de synchronisation. L'étape 34 contrôle la détection d'un signal de synchronisation SY pendant la durée T1 à une étape 35. Si le signal de synchronisation arrive avant la fin de la durée T1, une étape 36 met ou maintient la réception et la démodulation en haut débit. Dans le cas contraire, une étape 37 positionne la réception en bas débit. A la fin de la réception du message bas débit, une étape 38 remet la réception en haut débit. A une étape 39, un contrôle de durées maximales T2 et T3 permet de passer en mode fonctionnement haut débit si un signal de synchronisation en bas débit n'est pas reçu à temps ou si la durée maximale d'un message long en bas débit est dépassée.

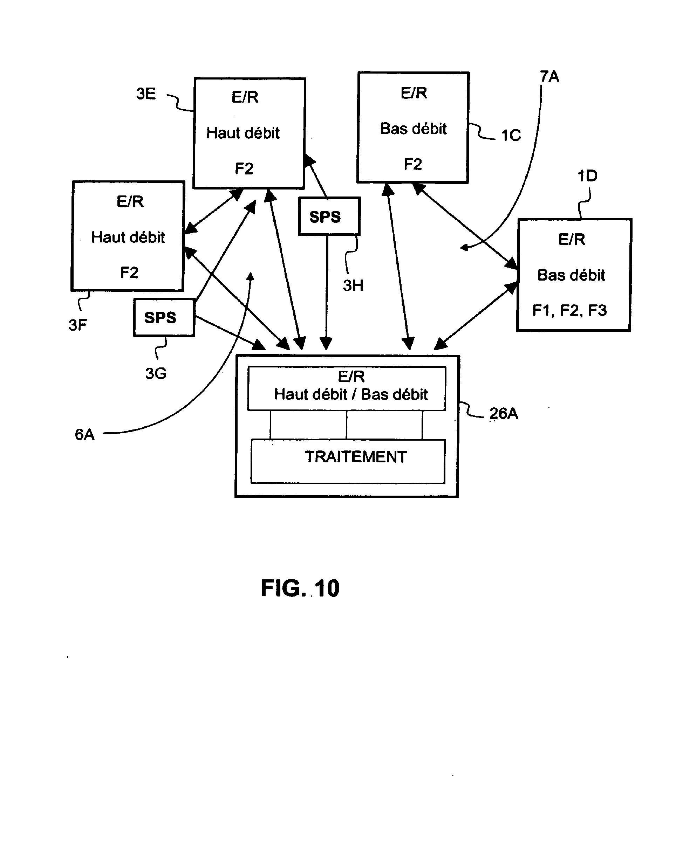

La figure 10 représente un schéma d'un système avec un réseau de communication haut débit 6A à une fréquence F2 et un réseau de communication bas débit 7A à plusieurs fréquences F1 F2 et F3 comportant au moins un dispositif de communication 26A selon un mode de réalisation de l'invention. Dans un tel système, au moins un dispositif de communication bas débit 1C et 1D peut communiquer sur une ou plusieurs fréquences F1 F2 et F3, au moins un dispositif de communication haut débit 3E, 3F, 3G et 3H communique avec au moins une fréquence F2 commune avec ledit dispositif de communication bas débit et au moins un dispositif de communication 26A reçoit des messages de communication en haut débits et en bas débit.

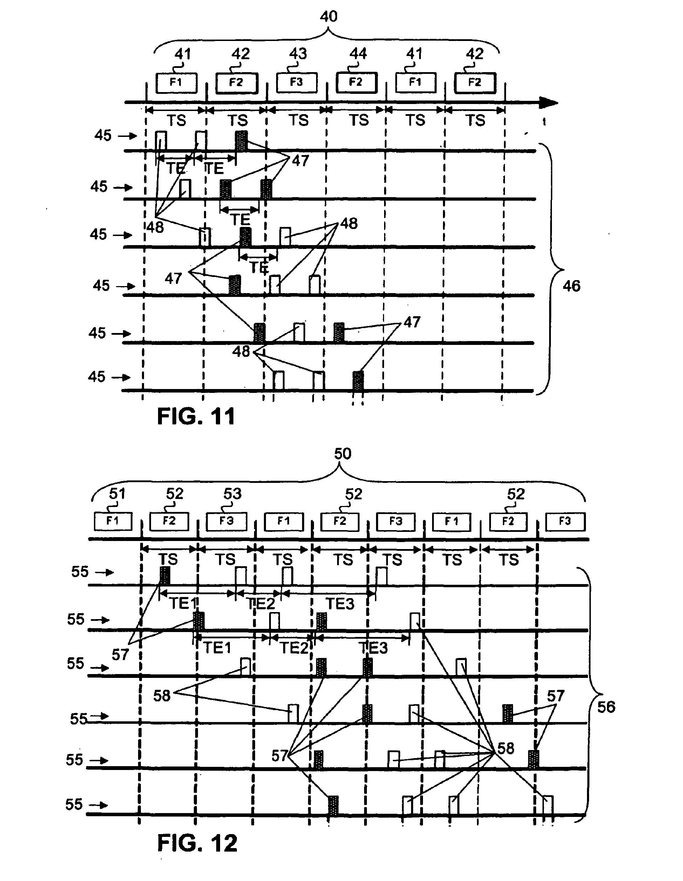

La figure 11 représente un premier chronogramme de fonctionnement montrant une première séquence de scrutation par changement de fréquence F1, F2 et F3 d'un récepteur et des périodes d'émission d'un émetteur haut débit dans un procédé selon un mode de réalisation de l'invention. Dans cette scrutation, la fréquence F2 commune entre le haut débit et le bas débit revient une fois sur deux avec une séquence F1, F2, F3, F2... tel que représenté sur la première partie 40 de la figure 11. Ainsi un cycle de scrutation a une première période 41 à une première fréquence F1 fonctionnant en bas débit, une seconde période 42 à une seconde fréquence F2 fonctionnant en haut ou en bas débit, et une troisième période 43 à une troisième fréquence F3 fonctionnant en bas débit puis une quatrième période 44 à ladite seconde fréquence F2 fonctionnant en haut ou en bas débit. L'étape 44 est donc identique à l'étape 42. Pour être capté rapidement et surement par un récepteur selon la première séquence de scrutation, un émetteur d'un dispositif de communication à haut débit émet à ladite seconde fréquence des messages répétitifs 45 espacés d'une période d'émission TE de durée différente des périodes TS dudit cycle de scrutation. Le contrôle de la commande de paramétrage de débit se fait alors pendant les périodes 42 ou 44 à la seconde fréquence F2 fonctionnant en haut et/ou en bas débit.

Dans ce cas, le dispositif de communication à haut débit 3E, 3F, 3G et 3H émet au moins trois messages 45 répétitifs. En prenant comme référence de durée des périodes TS du cycle de scrutation, de préférence la période d'émission TE des messages répétitifs a une durée sensiblement égale à 2/3 ou à 4/3 de ladite durée des périodes TS de scrutation. Sur la figure 11 les messages sont représentés plusieurs fois en décalé dans la partie 46. Dans la fenêtre de la fréquence F2 les messages 47 sont reçus puisqu'il suffit que le début du message soit détecté. Les autres messages 48 hors de la période avec F2 ne sont pas reçus.

La figure 12 représente un second chronogramme de fonctionnement montrant une seconde séquence de scrutation par changement de fréquence F1, F2 et F3 d'un récepteur et des périodes d'émission d'un émetteur haut débit dans un procédé selon un mode de réalisation de l'invention. Dans cette scrutation, la fréquence F2 commune entre le haut débit et le bas débit revient une fois sur trois avec une séquence F1, F2, F3, F1, F2, F3... tel que représenté sur la première partie 50 de la figure 12. Ainsi, un cycle de scrutation a une première période 51 à une première fréquence F1 fonctionnant en bas débit, une seconde période 52 à une seconde fréquence F2 fonctionnant en haut ou en bas débit et une troisième période 53 à une troisième fréquence F3 fonctionnant en bas débit.

Pour être capté rapidement et surement par un récepteur selon la seconde séquence de scrutation, un émetteur d'un dispositif de communication à haut débit 3E, 3F, 3G ou 3H émet à ladite seconde fréquence F2 des messages répétitifs espacés de plusieurs périodes de durées différentes TE1, TE2 et TE3. Le contrôle de la commande de paramétrage de débit se fait alors pendant les périodes 52 à la seconde fréquence F2 fonctionnant en haut et/ou en bas débit.

Dans ce cas, le dispositif de communication à haut débit 3E, 3F, 3G et 3H émet au moins quatre messages répétitifs. En prenant comme référence de durée des périodes TS du cycle de scrutation, de préférence les périodes d'émission entre des messages répétitifs ont une première durée TE1 sensiblement égale à 4/3 de la durée des périodes TS de scrutation, une seconde durée TE2 sensiblement égale à 2,5/3 de la durée TS des périodes de scrutation et une troisième TE3 durée sensiblement égale à 5/3 de la durée TS des périodes de scrutation. Sur la figure 12 les messages sont représentés plusieurs fois en décalé dans la partie 56. Dans la fenêtre de la fréquence F2, des messages 57 sont reçus puisqu'il suffit que le début du message soit détecté. D'autres messages 58 hors de la période avec F2 ne sont pas reçus.

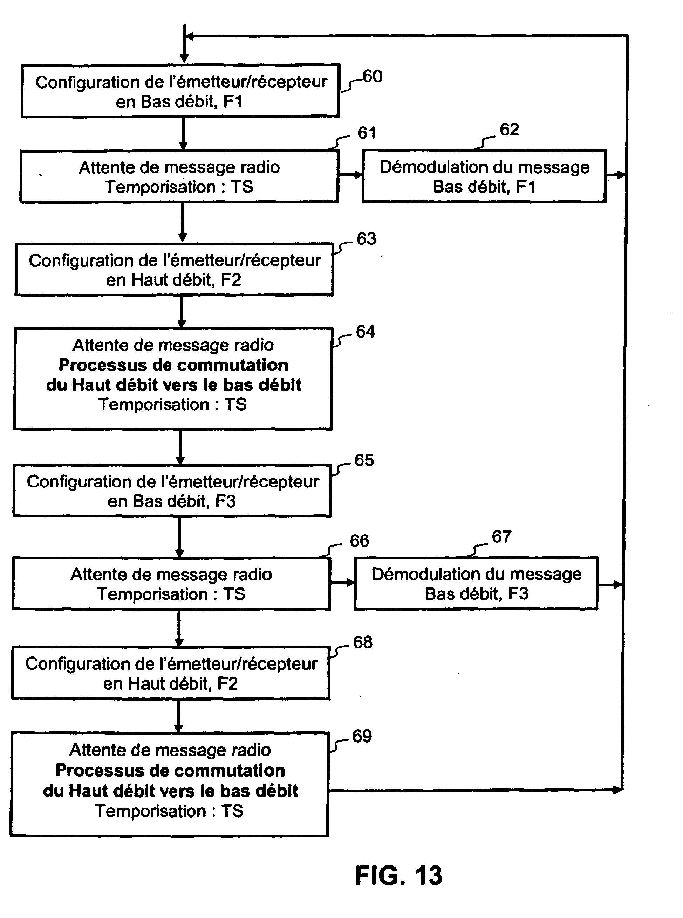

La figure 13 représente un second organigramme comportant des étapes d'un procédé selon l'invention avec changement de fréquence tel que représenté dans le chronogramme de la figure 11. A une étape 60, un émetteur/récepteur est configuré sur la fréquence F1 en bas débit. Puis, à une étape 61, un message radio est attendu pendant une période de scrutation TS. Si un message apparaît, la démodulation bas débit se fait à une étape 62. Ensuite, une étape 63 configure l'émetteur/récepteur en haut débit à une fréquence F2. Une étape 64 contrôle la commutation haut débit - bas débit comme par exemple dans l'organigramme de la figure 9 pendant une période de scrutation TS. A une étape 65, un émetteur/récepteur est configuré sur la fréquence F3 pour attendre un message radio pendant une période de scrutation TS à l'étape 66. Si un message apparaît, la démodulation bas débit se fait à une étape 67. Des étapes 68 et 69 font les mêmes fonctions que les étapes 63 et 64 respectivement.

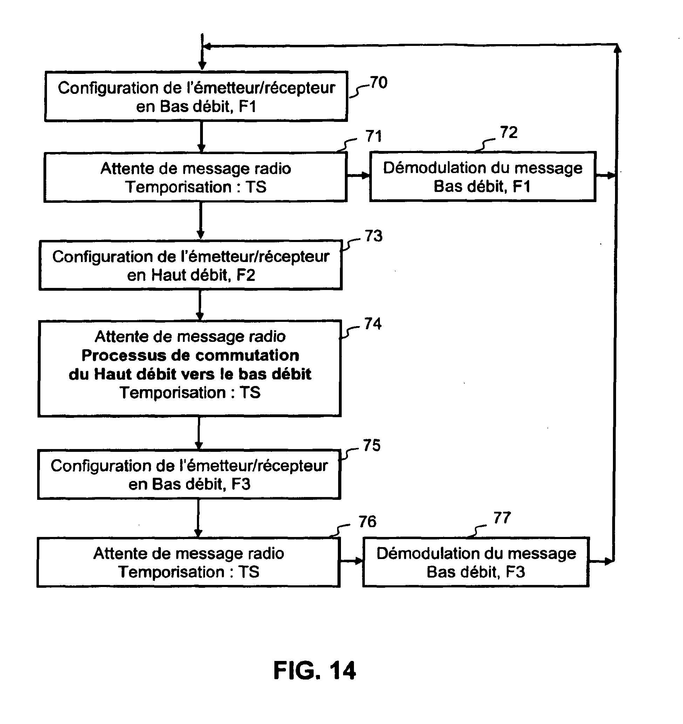

La figure 14 représente un troisième organigramme comportant des étapes d'un procédé selon l'invention avec changement de fréquence tel que représenté dans le chronogramme de la figure 12. A une étape 70 un émetteur/récepteur est configuré sur la fréquence F1 en bas débit. Puis, à une étape 71, un message radio est attendu pendant une période de scrutation TS. Si un message apparaît, la démodulation bas débit se fait à une étape 72. Ensuite, une étape 73 configure l'émetteur/récepteur en haut débit à une fréquence F2. Une étape 74 contrôle la commutation haut débit - bas débit comme par exemple dans l'organigramme de la figure 9 pendant une période de scrutation TS. A une étape 75, un émetteur/récepteur est configuré sur la fréquence F3 pour attendre un message radio pendant une période de scrutation TS à l'étape 76. Si un message apparaît, la démodulation bas débit se fait à une étape 77.

De préférence, les périodes de scrutation TS ont des durées supérieures à des durées de messages courts et très inférieures à des durées de messages longs en bas débits. Par exemple le changement de fréquence se fait avec des périodes TS de 3 mS. Ces périodes sont interrompues ou décalées lorsqu'un message est en cours de réception. A la fin de la réception, la scrutation par changement de fréquence reprend.

Dans les dispositifs décrits ci-dessus le circuit de traitement est de préférence un microcontrôleur comportant des entrées d'interruption pour recevoir les signaux de détection de porteuse CS et de Synchronisation SY. Ainsi, les signaux CS et SY déclenchent des interruptions pour le traitement du paramétrage haut débit bas débit. Le microcontrôleur peut aussi communiquer avec le circuit 21 d'émission et/ou de réception à travers une liaison série pouvant porter plusieurs types de signaux, notamment le signal CS de porteuse, le signal SY de synchronisation, le signal D de donnée et/ou le signal HL de paramétrage de mode de fonctionnement.

Dans les exemples montrés ci-dessus, les dispositifs à haut débit et à messages courts émettent des salves de messages répétitifs pour être vus aussi dans des dispositifs à changement de fréquence. Ces dispositifs peuvent aussi émettre plusieurs salves de signaux espacées d'une durée supérieure à un message bas débit long pour être aussi captés de manière plus certaine.

Sans sortir du cadre de l'invention les signaux représentatifs de détection de porteuse et de synchronisation concernent aussi des signaux qui sont similaires. Par exemple, un signal de fin de préambule, un signal de début de message, ou de premier bit de message peuvent être assimilés à un signal dit de synchronisation tel que définis ci-dessus.

## Revendications

1. Dispositif de communication pour réseaux de communication sans fil comportant :
- des moyens d'émission et/ou de réception pour communiquer selon un bas débit et selon un haut débit, et
- des moyens (10) de traitement connectés aux moyens d'émission et/ou de réception pour recevoir et envoyer des signaux de données (D)
**caractérisé en ce que**
- lesdits moyens (21) d'émission et/ou de réception comportent
- des moyens de paramétrage pour changer le mode fonctionnement en haut débit et en bas débit, et
- des moyens pour fournir un signal (CS) représentatif de la détection d'un signal de porteuse, et
- des moyens pour fournir un signal (SY) représentatif de la synchronisation, et
- les moyens de traitement (22) sont connectés aux moyens (21) d'émission et/ou de réception :
- pour recevoir ledit signal (CS) représentatif de la réception d'un signal de porteuse et ledit signal (SY) représentatif de la réception d'un signal de synchronisation, et
- pour fournir aux moyens de paramétrage un signal (HL) de paramétrage de mode de fonctionnement en fonction dudit signal représentatif de la réception dudit signal (CS) de porteuse et dudit signal (SY) représentatif de la synchronisation, l
lesdits moyens de réception étant configurés en écoute d'un signal à haut débit,
lesdits moyens de traitement (22) fournissant ledit signal (HL) de paramétrage de mode de fonctionnement pour un fonctionnement en bas débit lorsque ledit signal (SY) représentatif de la synchronisation n'est pas reçu avant la fin d'un premier temps (T1) prédéterminé après ledit signal (CS) représentatif de la réception d'un signal de porteuse.

2. Dispositif de communication selon la revendication 1 **caractérisé en ce que** lesdits moyens de traitement fournissent ledit signal (HL) de paramétrage de mode de fonctionnement pour un fonctionnement en haut débit :
- lorsque ledit signal (SY) représentatif de la synchronisation haut débit est reçu après ledit signal (CS) représentatif de la réception d'un signal de porteuse et avant la fin d'un premier temps (T1) prédéterminé,
- à l'initialisation par défaut,
- après la fin de la réception d'un message en haut débit ou en bas débit,
- lorsque ledit signal (SY) représentatif de la synchronisation bas débit n'est pas reçu après ledit signal (CS) représentatif de la réception d'un signal de porteuse et avant la fin d'un second temps (T2) prédéterminé supérieur au premier temps prédéterminé, ou
- après un troisième temps (T3) prédéterminé depuis la détection dudit signal représentatif de la réception d'un signal de porteuse, ledit troisième temps étant supérieur à la durée maximale de réception d'un message long en bas débit.

3. Dispositif de communication selon l'une quelconque des revendications 1 ou 2 **caractérisé en ce qu'**il comporte une liaison électronique entre lesdits moyens (21) d'émission et/ou de réception et lesdits moyens (22) de traitement pour communiquer sur le même support au moins deux signaux parmi le signal (CS) de porteuse, le signal (SY) de synchronisation, le signal (D) de donnée et/ou le signal (HL) de paramétrage de mode de fonctionnement.

4. Passerelle de communication entre réseaux de communication sans fil comportant des moyens (21) de communication pour pouvoir communiquer entre des réseaux de communication à débits différents comportant au moins un dispositif de communication (20) selon l'une quelconque des revendications 1 à 3 pour recevoir des messages de communication en haut débits et en bas débit.

5. Appareil de commande électrique comportant des moyens (23) de réception de télécommande comportant au moins un dispositif (20) de communication selon l'une quelconque des revendications 1 à 3 pour recevoir des messages de communication en haut débits et en bas débit.

6. Système de communication pour réseaux de communication sans fil comportant :
- au moins un dispositif (1C, 1D) de communication bas débit pouvant communiquer sur une ou plusieurs fréquences (F1, F2, F3),
- au moins un dispositif (3E, 3F, 3G, 3H) de communication haut débit communiquant avec au moins une fréquence (F2) commune avec lesdits moyens de communication bas débit
comportant au moins un dispositif (20, 26, 26A) de communication selon l'une quelconque des revendications 1 à 3 pour recevoir des messages de communication en haut débits et en bas débit

7. Procédé de communication pour réseaux de communication sans fil communiquant selon un haut débit et selon un bas débit **caractérisé en ce qu'**il comporte des étapes :
- de configuration (30) du fonctionnement en haut débit,
- de détection (32) d'un signal représentatif de la réception d'un signal (CS) de porteuse,
- de fourniture (34) d'un signal représentatif de la synchronisation (SY),
- de commande (36, 37) de paramétrage de modes de fonctionnement haut débit ou bas débit en fonction dudit signal représentatif de la réception d'un signal (CS) de porteuse et dudit signal (SY) représentatif de la synchronisation,
ladite commande (37) de paramétrage de modes de fonctionnement vers le bas débit est réalisée lorsque ledit signal (SY) représentatif de la synchronisation n'est pas reçu avant la fin d'un premier temps (T1) prédéterminé après ledit signal représentatif de la réception d'un signal (CS) de porteuse.

8. Procédé de communication selon la revendication 7 **caractérisé en ce que** la commande de paramétrage de modes de fonctionnement vers le haut débit est réalisée :
- lorsque ledit signal représentatif de la synchronisation haut débit est reçu après ledit signal représentatif de la réception d'un signal de porteuse et avant la fin d'un premier temps prédéterminé (34),
- à l'initialisation par défaut (30),
- après la fin de la réception d'un signal en haut débit (36) ou en bas débit (38),
- lorsque ledit signal représentatif de la synchronisation bas débit n'est pas reçu après ledit signal représentatif de la réception d'un signal de porteuse et avant là fin d'un second temps (T2) prédéterminé supérieur au premier temps prédéterminé (39), ou
- après un troisième temps (T3) prédéterminé (39) depuis la détection dudit signal représentatif de la réception d'un signal de porteuse, ledit troisième temps étant supérieur à la durée maximale de réception d'un signal long en bas débit.

9. Procédé de communication selon l'une quelconque des revendications 7 ou 8 **caractérisé en ce qu'**il comporte :
- la scrutation selon un cycle de scrutation ayant une première période (41, 60, 61, TS) à une première fréquence (F1) fonctionnant en bas débit, une seconde période (42, 63, 64, TS) à une seconde fréquence (F2) fonctionnant en haut ou en bas débit, une troisième période (43, 65, 66, TS) à une troisième fréquence (F3) fonctionnant en bas débit, et une quatrième période (44, 68, 69, TS) à ladite seconde fréquence (F2) fonctionnant en haut ou en bas débit,
- l'émission par un dispositif de communication à haut débit à ladite seconde fréquence (F2) de messages (45) répétitifs espacés d'une période d'émission (TE) de durée différente des périodes (TS, 41, 42, 43, 44) dudit cycle de scrutation, et
- le contrôle de commande de paramétrage de débit pendant les périodes (42, 44, 64, 69) à une seconde fréquence (F2) fonctionnant en haut ou en bas débit.

10. Procédé de communication selon la revendication 9 **caractérisé en ce que** :
- ledit dispositif de communication à haut débit émet au moins trois messages (45) répétitifs,
- lesdites périodes (TS) du cycle de scrutation ont une première durée, et
- ladite période (TE) d'émission desdits messages répétitifs a une durée sensiblement égale à 2/3 ou à 4/3 de la durée des périodes (TS) de scrutation.

11. Procédé de communication selon l'une quelconque des revendications 7 ou 8 **caractérisé en ce qu'**il comporte :
- la scrutation selon un cycle de scrutation ayant une première période (51, 70, 71, TS) à une première fréquence (F1) fonctionnant en bas débit, une seconde période (52, 73, 74, TS) à une seconde fréquence (F2) fonctionnant en haut ou en bas débit et une troisième période (53, 75, 76, TS) à une troisième fréquence (F3) fonctionnant en bas débit,
- l'émission par un dispositif de communication à haut débit à ladite seconde fréquence (F2) de messages répétitifs espacés de plusieurs périodes (TE1, TE2, TE3) de durées différentes, et
- le contrôle de commande de paramétrage de débit pendant les périodes (52, 74) à une seconde fréquence (F2) fonctionnant en haut ou en bas débit.

12. Procédé de communication selon la revendication 11 caractérisé en ce
- ledit dispositif de communication à haut débit émet au moins quatre messages (55) répétitifs,
- lesdites périodes (TS) du cycle de scrutation ont une première durée, et
- les périodes (TE1, TE2, TE3) d'émission entre des messages répétitifs ont une première durée sensiblement égale à 4/3 de la durée des périodes (TS) de scrutation, une seconde durée sensiblement égale à 2,5/3 de la durée des périodes (TS) de scrutation et une troisième durée sensiblement égale à 5/3 de la durée des périodes (TS) de scrutation.

## Patentansprüche

1. Kommunikationseinrichtung für drahtlose Kommunikationsnetze, umfassend:
- Sende- und/oder Empfangsmittel, um gemäß einer niedrigen Durchsatzrate und gemäß einer hohen Durchsatzrate zu kommunizieren, und
- Behandlungsmittel (10), die mit Sende- und/oder Empfangsmitteln verbunden sind, um Datensignale (D) zu empfangen und zu verschicken,
**dadurch gekennzeichnet, dass**
- die Sende- und/oder Empfangsmittel (21) Folgendes umfassen:
- Einstellmittel, um den Funktionsmodus mit hoher Durchsatzrate und niedriger Durchsatzrate zu ändern, und
- Mittel zum Bereitstellen eines Signals (CS), das für die Erkennung eines Trägersignals repräsentativ ist, und
- Mittel zum Bereitstellen eines Signals (SY), das für die Synchronisation repräsentativ ist, und
- die Behandlungsmittel (22) mit Sende- und/oder Empfangsmitteln (21) verbunden sind:
- um das Signal (CS), das für den Empfang eines Trägersignals repräsentativ ist, und das Signal (SY), das für den Empfang eines Synchronisationssignals repräsentativ ist, zu empfangen, und
- um für die Einstellmittel ein Einstellsignal (HL) des Funktionsmodus in Abhängigkeit von dem Signal, das für den Empfang des Trägersignals (CS) repräsentativ ist, und dem Signal (SY), das für die Synchronisation repräsentativ ist, bereitzustellen,
wobei die Empfangsmittel zum Abhören eines Signals mit hoher Durchsatzrate konfiguriert sind,
wobei die Behandlungsmittel (22), die das Einstellsignal (HL) für den Funktionsmodus für eine Funktion mit geringer Durchsatzrate bereitstellen, wenn das Signal (SY), das für die Synchronisation repräsentativ ist, nicht vor dem Ende einer ersten vorbestimmten Zeit (T1) nach dem Signal (CS), das für den Empfang eines Trägersignals repräsentativ ist, empfangen wird.

2. Kommunikationseinrichtung nach Anspruch 1, **dadurch gekennzeichnet, dass** die Behandlungsmittel das Signal zum Einstellen (HL) des Funktionsmodus für eine Funktion mit hoher Durchsatzrate bereitstellen:
- wenn das Signal (SY), das für die Synchronisation mit einer hohen Durchsatzrate repräsentativ ist, nach dem Signal (CS), das für das Empfangen eines Trägersignals repräsentativ ist, und vor dem Ende einer ersten vorbestimmten Zeit (T1), empfangen wird,
- bei der Standardinitialisierung,
- nach dem Ende des Empfangs eines Inhalts mit hoher Durchsatzrate oder geringer Durchsatzrate,
- wenn das Signal (SY), das für die Synchronisation mit niedrigem Durchsatz repräsentativ ist, nicht nach dem Signal (CS), das für den Empfang eines Trägersignals repräsentativ ist, und vor dem Ende einer zweiten vorbestimmten Zeit (T2), die größer ist als die erste vorbestimmte Zeit, empfangen wird, oder
- nach einer dritten vorbestimmten Zeit (T3) ab dem Erfassen des Signals, das für den Empfang eines Trägersignals repräsentativ ist, wobei die dritte Zeit größer ist als die maximale Empfangsdauer eines langen Inhalts mit geringer Durchsatzrate.

3. Kommunikationseinrichtung nach einem der Ansprüche 1 oder 2, **dadurch gekennzeichnet, dass** sie eine elektronische Verbindung zwischen den Sende- und/oder Empfangsmitteln (21) und den Behandlungsmitteln (22) umfasst, um auf dem gleichen Träger mindestens zwei Signale aus dem Trägersignal (CS), dem Synchronisationssignal (SY), dem Datensignal (D) und/oder dem Signal (HL) zum Einstellen des Funktionsmodus zu kommunizieren.

4. Kommunikationsschnittstelle zwischen drahtlosen Kommunikationsnetzwerken, umfassend Kommunikationsmittel (21), um zwischen Kommunikationsnetzwerken mit verschiedenen Durchsatzraten kommunizieren zu können, umfassend mindestens eine Kommunikationseinrichtung (20) nach einem der Ansprüche 1 bis 3, um Kommunikationsinhalte mit hohen Durchsatzrate und mit niedriger Durchsatzrate zu empfangen.

5. Elektrische Steuerungsvorrichtung, umfassend Fernsteuerungsempfangsmittel (23), umfassend mindestens eine Kommunikationseinrichtung (20) nach einem der Ansprüche 1 bis 3, um Kommunikationsinhalte mit hohen Durchsatzraten und mit niedrigen Durchsatzraten zu empfangen.

6. Kommunikationssystem für drahtlose Kommunikationsnetze, umfassend:
- mindestens eine Kommunikationseinrichtung (1C, 1D) mit niedriger Durchsatzrate, die auf einer oder mehreren Frequenzen (F1, F2, F3) kommunizieren kann,
- mindestens eine Kommunikationseinrichtung (3E, 3F, 3G, 3H) mit hoher Durchsatzrate, die mit mindestens einer gemeinsamen Frequenz (F2) mit den Kommunikationsmitteln mit niedriger Durchsatzrate kommuniziert,
umfassend mindestens eine Kommunikationseinrichtung (20, 26, 26A) nach einem der Ansprüche 1 bis 3, um Kommunikationsinhalte mit hohen Durchsatzraten und mit niedriger Durchsatzrate zu empfangen.

7. Kommunikationsverfahren für drahtlose Kommunikationsnetzwerke gemäß einer hohen Durchsatzrate und gemäß einer niedrigen Durchsatzrate, **dadurch gekennzeichnet, dass** es Schritte:
- zur Konfiguration (30) der Funktion mit hoher Durchsatzrate,
- zur Erfassung (32) eines Signals, das für den Empfang eines Trägersignals (CS) repräsentativ ist,
- zur Bereitstellung (34) eines Signals, das für die Synchronisation (SY) repräsentativ ist,
- zur Steuerung (36, 37) der Einstellung der Funktionsmodi mit hoher Durchsatzrate oder niedriger Durchsatzrate in Abhängigkeit von dem Signal, das für den Empfang eines Trägersignals (CS) repräsentativ ist, und dem Signal (SY), das für die Synchronisation repräsentativ ist,
umfasst, wobei die Steuerung (37) der Einstellung der Funktionsmodi auf die niedrige Durchsatzrate ausgeführt wird, wenn das Signal (SY), das für die Synchronisation repräsentativ ist, nicht vor dem Ende einer ersten vorbestimmten Zeit (T1) nach dem Signal, das für den Empfang eines Trägersignals (CS) repräsentativ ist, empfangen wird.

8. Kommunikationsverfahren nach Anspruch 7, **dadurch gekennzeichnet, dass** die Steuerung der Einstellung der Funktionsmodi auf die hohe Durchsatzrate ausgeführt wird:
- wenn das Signal, das für die Synchronisation mit hoher Durchsatzrate repräsentativ ist, nach dem Signal, das für das Empfangen eines Trägersignals repräsentativ ist, und vor dem Ende einer ersten vorbestimmten Zeit (34), empfangen wird,
- bei der Standardinitialisierung (30),
- nach dem Ende des Empfangs eines Signals mit hoher Durchsatzrate (36) oder mit geringer Durchsatzrate (38),
- wenn das Signal, das für die Synchronisation mit niedriger Durchsatzrate repräsentativ ist, nicht nach dem Signal, das für den Empfang eines Trägersignals repräsentativ ist, und vor dem Ende einer zweiten vorbestimmten Zeit (T2), die größer ist als die erste vorbestimmte Zeit (39), empfangen wird, oder
- nach einer dritten vorbestimmten Zeit (T3) (39) ab dem Erfassen des Signals, das für den Empfang eines Trägersignals repräsentativ ist, wobei die dritte Zeit größer ist als die maximale Empfangsdauer eines langen Signals mit geringer Durchsatzrate.

9. Kommunikationsverfahren nach einem der Ansprüche 7 bis 8, **dadurch gekennzeichnet, dass** es Folgendes umfasst:
- die Abfrage gemäß einem Abfragezyklus, der einen ersten Zeitraum (41, 60, 61, TS) bei einer ersten Frequenz (F1), die mit einer niedrigen Durchsatzrate arbeitet, einen zweiten Zeitraum (42, 63, 64, TS) bei einer zweiten Frequenz (F2), die mit einer hohen oder einer niedrigen Durchsatzrate arbeitet, einen dritten Zeitraum (43, 65, 66, TS) bei einer dritten Frequenz (F3), die mit einer niedrigen Durchsatzrate arbeitet, und einen vierten Zeitraum (44, 68, 69, TS) bei der zweiten Frequenz (F2), die mit einer hohen oder einer niedrigen Durchsatzrate arbeitet, aufweist,
- Senden über eine Kommunikationseinrichtung mit hoher Durchsatzrate bei der zweiten Frequenz (F2) von sich wiederholenden Inhalten (45), die um einen Sendezeitraum (TE) beabstandet sind, der eine Dauer aufweist, die von den Zeiträumen (TS, 41, 42, 43, 44) des Abfragezyklus verschieden ist, und
- Kontrollieren der Steuerung der Einstellung der Durchsatzrate während der Zeiträume (42, 44, 64, 69) bei einer zweiten Frequenz (F2), die mit einer hohen oder niedrigen Durchsatzrate arbeitet.

10. Kommunikationsverfahren nach Anspruch 9, **dadurch gekennzeichnet, dass**:
- die Kommunikationseinrichtung mit hoher Durchsatzrate mindestens drei sich wiederholende Inhalte (45) sendet,
- die Zeiträume (TS) des Abfragezyklus eine erste Dauer aufweisen, und
- der Sendezeitraum (TE) der sich wiederholenden Inhalte eine Dauer aufweist, die im Wesentlichen gleich 2/3 oder 4/3 der Dauer der Abfragezeiträume (TS) ist.

11. Kommunikationsverfahren nach einem der Ansprüche 7 bis 8, **dadurch gekennzeichnet, dass** es Folgendes umfasst:
- Abfragen gemäß einem Abfragezyklus, der einen ersten Zeitraum (51, 70, 71, TS) bei einer ersten Frequenz (F1), die mit einer niedrigen Durchsatzrate arbeitet, einen zweiten Zeitraum (52, 73, 74, TS) bei einer zweiten Frequenz (F2), die mit einer hohen oder einer niedrigen Durchsatzrate arbeitet und einen dritten Zeitraum (53, 75, 76, TS) bei einer dritten Frequenz (F3), die mit einer niedrigen Durchsatzrate arbeitet, aufweist,
- Senden über eine Kommunikationseinrichtung mit hoher Durchsatzrate bei der zweiten Frequenz (F2) von sich wiederholenden Inhalten, die mit mehreren Zeiträumen (TE1, TE2, TE3) mit verschiedenen Dauern beabstandet sind, und
- Kontrollieren der Steuerung der Einstellung der Durchsatzrate während der Zeiträume (52, 74) bei einer zweiten Frequenz (F2), die mit einer hohen oder niedrigen Durchsatzrate arbeitet.

12. Kommunikationsverfahren nach Anspruch 11, **dadurch gekennzeichnet, dass**:
- die Kommunikationseinrichtung mit hoher Durchsatzrate mindestens vier sich wiederholende Inhalte (55) sendet,
- die Zeiträume (TS) des Abfragezyklus eine erste Dauer aufweisen, und
- die Sendezeiträume (TE1, TE2, TE3) zwischen den sich wiederholenden Inhalten eine erste Dauer im Wesentlichen gleich 4/3 der Dauer der Abfragezeiträume (TS), eine zweite Dauer im Wesentlichen gleich 2,5/3 der Dauer der Abfragezeiträume (TS) und eine dritte Dauer im Wesentlichen gleich 5/3 der der Dauer der Abfragezeiträume (TS) aufweisen.

## Claims

1. Communication device for wireless communication networks comprising:
- transmission and/or reception means for communicating according to a low bitrate and according to a high bitrate, and
- processing means (10) connected to the transmission and/or reception means for receiving and dispatching data signals (D)
**characterized in that**
- said transmission and/or reception means (21) comprise
- parametrization means for changing the mode of operation at high bitrate and at low bitrate, and
- means for providing a signal (CS) representative of the detection of a carrier signal, and
- means for providing a signal (SY) representative of synchronization, and
- the processing means (22) are connected to the transmission and/or reception means (21):
- for receiving said signal (CS) representative of the reception of a carrier signal and said signal (SY) representative of the reception of a synchronization signal, and
- for providing the parametrization means with a mode of operation parametrization signal (HL) as a function of said signal representative of the reception of said carrier signal (CS) and of said signal (SY) representative of synchronization,
said reception means being configured to listen for a high-bitrate signal,
said processing means (22) providing said mode of operation parametrization signal (HL) for operation at low bitrate when said signal (SY) representative of synchronization is not received before the end of a first predetermined time (T1) after said signal (CS) representative of the reception of a carrier signal.

2. Communication device according to Claim 1, **characterized in that** said processing means provide said mode of operation parametrization signal (HL) for operation at high bitrate:
- when said signal (SY) representative of the high-bitrate synchronization is received after said signal (CS) representative of the reception of a carrier signal and before the end of a first predetermined time (T1),
- upon initialization by default,
- after the end of the reception of a message at high bitrate or at low bitrate,
- when said signal (SY) representative of the low-bitrate synchronization is not received after said signal (CS) representative of the reception of a carrier signal and before the end of a second predetermined time (T2) greater than the first predetermined time, or
- after a third predetermined time (T3) since the detection of said signal representative of the reception of a carrier signal, said third time being greater than the maximum duration of reception of a long message at low bitrate.

3. Communication device according to either of Claims 1 and 2, **characterized in that** it comprises an electronic link between said transmission and/or reception means (21) and said processing means (22) for communicating on the same medium at least two signals from among the carrier signal (CS), the synchronization signal (SY), the data signal (D) and/or the mode of operation parametrization signal (HL).

4. Communication gateway between wireless communication networks comprising communication means (21) for being able to communicate between communication networks at different bitrates, comprising at least one communication device (20) according to any one of Claims 1 to 3 for receiving communication messages at high bitrates and at low bitrate.

5. Electrical control apparatus comprising remote-control reception means (23) comprising at least one communication device (20) according to any one of Claims 1 to 3 for receiving communication messages at high bitrates and at low bitrate.

6. Communication system for wireless communication networks comprising:
- at least one low-bitrate communication device (1 C, 1D) that is able to communicate on one or more frequencies (F1, F2, F3),
- at least one high-bitrate communication device (3E, 3F, 3G, 3H) communicating with at least one frequency (F2) common with said low-bitrate communication means,
comprising at least one communication device (20, 26, 26A) according to any one of Claims 1 to 3 for receiving communication messages at high bitrates and at low bitrate.

7. Communication method for wireless communication networks communicating according to a high bitrate and according to a low bitrate, **characterized in that** it comprises steps:
- of configuration (30) of operation at high bitrate,
- of detection (32) of a signal representative of the reception of a carrier signal (CS),
- of provision (34) of a signal representative of synchronization (SY),
- of control (36, 37) of parametrization of modes of high-bitrate or low-bitrate operation as a function of said signal representative of the reception of a carrier signal (CS) and of said signal (SY) representative of synchronization,
said control (37) of parametrization of modes of operation to the low bitrate is carried out when said signal (SY) representative of synchronization is not received before the end of a first predetermined time (T1) after said signal representative of the reception of a carrier signal (CS).

8. Communication method according to Claim 7, **characterized in that** the control of parametrization of modes of operation to the high bitrate is carried out:
- when said signal representative of the high-bitrate synchronization is received after said signal representative of the reception of a carrier signal and before the end of a first predetermined time (34),
- upon initialization by default (30),
- after the end of the reception of a signal at high bitrate (36) or at low bitrate (38),
- when said signal representative of the low-bitrate synchronization is not received after said signal representative of the reception of a carrier signal and before the end of a second predetermined time (T2) greater than the first predetermined time (39), or
- after a third predetermined (39) time (T3) since the detection of said signal representative of the reception of a carrier signal, said third time being greater than the maximum duration of reception of a long signal at low bitrate.

9. Communication method according to either of Claims 7 and 8, **characterized in that** it comprises:
- the polling according to a polling cycle having a first period (41, 60, 61, TS) at a first frequency (F1) operating at low bitrate, a second period (42, 63, 64, TS) at a second frequency (F2) operating at high or at low bitrate, a third period (43, 65, 66, TS) at a third frequency (F3) operating at low bitrate, and a fourth period (44, 68, 69, TS) at said second frequency (F2) operating at high or at low bitrate,
- the transmission by a high-bitrate communication device at said second frequency (F2) of repetitive messages (45) spaced apart by a transmission period (TE) of different duration from the periods (TS, 41, 42, 43, 44) of said polling cycle, and
- the checking of bitrate parametrization control during the periods (42, 44, 64, 69) at a second frequency (F2) operating at high or at low bitrate.

10. Communication method according to Claim 9, **characterized in that**:
- said high-bitrate communication device transmits at least three repetitive messages (45),
- said periods (TS) of the polling cycle have a first duration, and
- said period (TE) of transmission of said repetitive messages has a duration substantially equal to 2/3 or to 4/3 of the duration of the polling periods (TS).

11. Communication method according to either of Claims 7 and 8, **characterized in that** it comprises:
- the polling according to a polling cycle having a first period (51, 70, 71, TS) at a first frequency (F1) operating at low bitrate, a second period (52, 73, 74, TS) at a second frequency (F2) operating at high or at low bitrate and a third period (53, 75, 76, TS) at a third frequency (F3) operating at low bitrate,
- the transmission by a high-bitrate communication device at said second frequency (F2) of repetitive messages spaced apart by several periods (TE1, TE2, TE3) of different durations, and
- the checking of bitrate parametrization control during the periods (52, 74) at a second frequency (F2) operating at high or at low bitrate.

12. Communication method according to Claim 11, **characterized in that**
- said high-bitrate communication device transmits at least four repetitive messages (55),
- said periods (TS) of the polling cycle have a first duration, and
- the periods (TE1, TE2, TE3) of transmission between repetitive messages have a first duration substantially equal to 4/3 of the duration of the polling periods (TS), a second duration substantially equal to 2.5/3 of the duration of the polling periods (TS) and a third duration substantially equal to 5/3 of the duration of the polling periods (TS).
